# EUROPÄISCHE PATENTSCHRIFT

(11) **EP 0 473 005 B1**
(45) Veröffentlichungstag und Bekanntmachung des Hinweises auf die Patenterteilung: **20.04.1994**
(21) Anmeldenummer: 91113619.0
(22) Anmeldetag: 14.08.1991
(51) Int. Cl.: F26B 23/08, B29D 23/20, B65G 47/22, B29L 23/22

(54) **Vorrichtung zum Herstellen eines Streifens aus Dichtungslack bei einer Tube**
Apparatus for producing a strip of sealing varnish on a tube
Appareil pour la production d'une bande d'étanchéité sur un tube

(30) Priorität: 31.08.1990 DE 4027549
(43) Veröffentlichungstag der Anmeldung: 04.03.1992
(73) Patentinhaber: Tubex GmbH Tuben- und Metallwarenfabrik, 72414 Rangendingen (DE)
(72) Erfinder: Strobel, Wendelin, W-7456 Rangendingen (DE)
(74) Vertreter: Charrier, Rolf, Dipl.-Ing.

(56) Entgegenhaltungen:
- DE-C- 658 238
- DE-C- 3 131 666
- GB-A- 1 326 753
- GB-A- 1 516 833
- US-A- 3 738 892

## Beschreibung

Die Erfindung betrifft eine Vorrichtung zum Herstellen eines Streifens aus Dichtungslack bei einer Tube nach dem Oberbegriff des Anspruches 1.

Um die Dichtigkeit des Tubenfalzes von Metalltuben bei Füllgütern mit sehrkriechaktiven Bestandteilen sicherzustellen, werden am offenen Mantelende innen ein 5 bis 12 mm breiter Streifen aus Dichtungslack aufgebracht. Bei den Dichtungslacken handelt es sich beispielsweise um wässrige Latexdispersionen, Kunstharzdispersionen und Heißsiegellacke.

Aufgebracht werden diese Dichtungslacke im Spritz- oder Schleuderverfahren. Soweit die Verpackung der leeren Tuben es zuläßt, ist es möglich, ohne weiteren Fertigungsvorgang den Streifen an der Luft zu trocknen. Üblicherweise erfolgt jedoch eine Trocknung in einem Trocknungsofen mittels Wärmestrahlung. Hierbei durchlaufen die Tuben den Trockner in Schalenketten. Dies bedingt komplizierte Übergabevorrichtungen in die Schalenkette der Trockner und aus der Schalenkette heraus. Da auf die Tuben vor dem Aufbringen des Dichtungsstreifens bereits die Tubenverschlüsse aufgeschraubt sind, findet infolge der Erwärmung der gesamten Tube mit Verschluß eine Verringerung des Drehmoments bis zur Lockerung des bereits aufgeschraubten Verschlusses statt.

Bei den vorerwähnten Latexdispersionen beträgt die Trocknungszeit eine bis zwei Minuten bei einer Temperatur von etwa 75° C bis 110° C. Versuche, diese Trocknungszeiten herabzusetzen, beispielsweise durch gezieltes Beblasen der Streifen mit Heißluft, schlugen fehl, da in diesem Fall die Oberfläche der Streifen abschließt und das Wasser im Streifeninnern nicht verdampfen kann. Die Streifen sind also nur äußerlich trocken.

Nach der DE-C-31 31 666 soll diesem Mangel dadurch abgeholfen werden, daß als Streifenmaterial ein gelöstes thermoplastisches Polyamidharz zum Einsatz kommt. Das Trocknen erfolgt durch Beblasen mit Heißluft mit einer Temperatur von 100° C bis 120° C über einige Sekunden hinweg. Nachteilig ist hierbei, daß das Harz sehr dünn aufgetragen werden muß, was große Schwierigkeiten in der Produktion bereitet. Der Hauptnachteil besteht jedoch darin, daß das Einsatzgebiet solcher Tuben begrenzt ist, denn im Pharmazie- und Lebensmittelbereich dürfen nur Latexdispersionen zum Einsatz kommen.

Aus der DE-C-658 238 ist eine Vorrichtung zum Trocknen von lackierten Blechen bekannt, bei der die Bleche durch den Luftspalt zwischen den Polschuhen eines mit Wechselstrom betriebenen Elektromagneten geführt werden. Die Frequenz des Wechselstroms soll relativ gering, bevorzugt die des vorhandenen Wechselstromnetzes sein.

Es besteht die Aufgabe, die Vorrichtung so auszubilden, daß zum Trocknen des Dichtungsstreifens die Tube nur im Bereich des offenen Mantelendes erwärmt wird.

Gelöst wird diese Aufgabe mit den kennzeichnenden Merkmalen des Anspruches 1. Vorteilhafte Ausgestaltungen sind den Unteransprüchen entnehmbar.

Ein Ausführungsbeispiel wird nachfolgend anhand der Zeichnungen näher erläutert. Es zeigen:
- Figur 1:: eine Seitenansicht der Vorrichtung;
- Figur 2:: eine Draufsicht auf die Vorrichtung;
- Figur 3:: eine Draufsicht auf einen Teil der Vorrichtung im Bereich des Anschlags;
- Figur 4:: eine Seitenansicht des Teils der Vorrichtung nach Figur 3 und

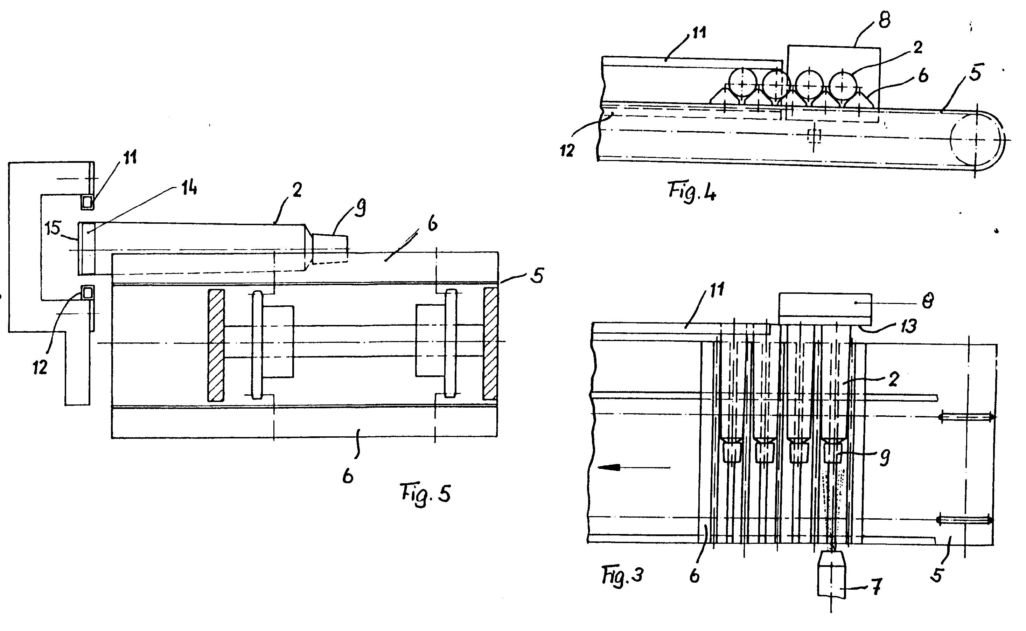

- Figur 5:: einen Schnitt durch einen Teil der Vorrichtung.

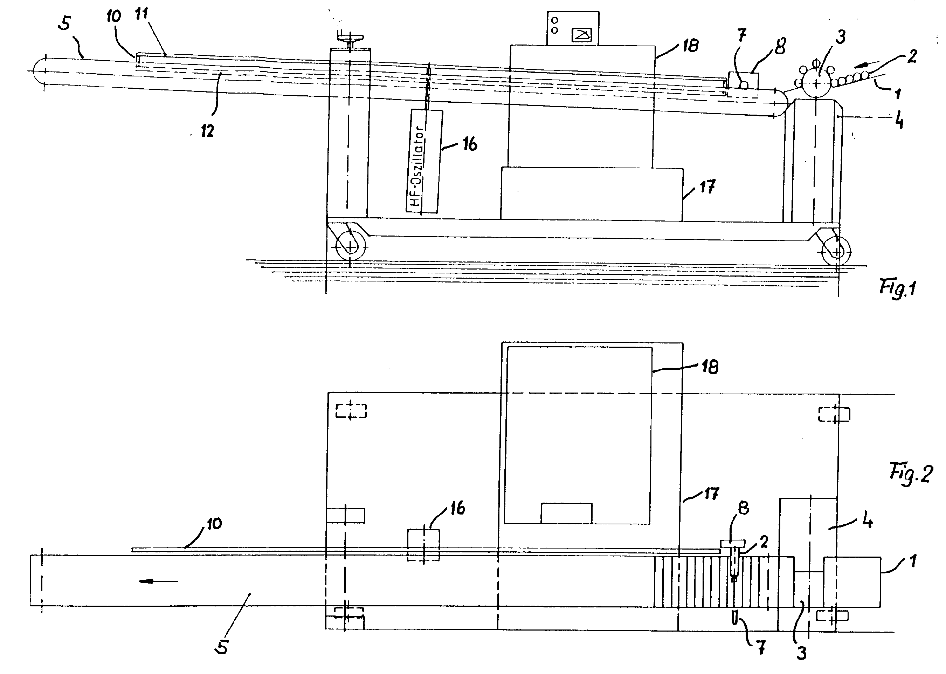

Die auf einer Schrägfläche 1 zugeführten Tuben 2 werden von einer Fördertrommel 3 eines Auftragsgeräts 4 erfaßt und hierbei in bekannter Weise mit dem Dichtungsstreifenversehen. Danach gelangen sie auf ein endloses Förderband 5, das, wie die Figur 4 deutlich zeigt, mit Prismen 6 besetzt ist. Die Tuben 2 werden also jeweils zwischen zwei benachbarten Prismen 6 aufgenommen. Die auf dem oberen Trum des Transportbands 5 aufliegenden Tuben 2 gelangen sodann in den Bereich einer Blasdüse 7, der gegenüber ein Anschlag 8 angeordnet ist. Der aus der Blasdüse 7 austretende Luftstrahl trifft auf den Schraubtubenverschluß 9 auf, so daß die jeweilige Tube zwischen zwei benachbarten Prismen 6 gegen den Anschlag 8 geführt wird. Nach dem Anschlag 8 ist angeordnet eine Induktionsschleife 10, deren oberes und unteres Schleifenstück 11, 12 über die Anschlagsebene 13 des Anschlags 8 übersteht. Das offene Mantelende 15 mit dem Streifen 14 aus Dichtungslack durchwandert auf diese Weise den Bereich zwischen den Schleifenstücken 11, 12, so daß durch Induktionserwärmung des Mantelendes der Tube der Streifen 14 getrocknet wird.

Bei der Induktionsschleife handelt es sich um eine wassergekühlte Induktionsschleife, die durch den HF-Oszillator 16 erwärmt wird. Das zur Kühlung der Induktionsschleife verwendete Wasser wird in einem Kühlwasserbehälter 17 bevorratet, dem eine Wasserrückkühlanlage 18 zugeordnet ist. Da die Schleifenstücke 11, 12 im Vergleich zum Tubendurchmesser relativ sehr lang sind, ist es möglich, das offene Mantelende 15 schonend zu erwärmen, ohne daß dabei eine Überhitzung stattfindet.

Da die Erwärmung nur auf das offene Mantelende 15 beschränkt ist, wird die Schraubverbindung zwischen Tube 2 und Verschluß 9 nicht beeinflußt. Gleiches gilt für die Lackierung und den Aufdruck beim Tubenmantel. Die Auf- und Abgabe der Tuben 2 beim Förderband 5 erfolgt in einer die Tuben schonenden Weise.

Die Trocknungszeit ist im Vergleich zur Warmlufttrocknung wesentlich kürzer. Da nur das Tubenende aufgeheizt wird, kühlen die Tuben rasch ab, so daß dem Trocknungsvorgang kein Kühlvorgang nachgeschaltet werden muß. Das Transportband selbst wird nicht aufgeheizt. Insgesamt ist eine große Energieeinsparung zu verzeichnen.

## Patentansprüche

1. Vorrichtung zum Herstellen eines Streifens aus Dichtungslack am offenen Mantelende einer Tube, bei welcher in einer ersten Station der Streifen auf der Tubeninnenseite aufgebracht und sodann der Streifen beim Durchwandern einer zweiten Station getrocknet wird, **dadurch gekennzeichnet,** daß sie ein endloses Transportband (5) aufweist, das die mit dem Streifen (14) versehenen Tuben (2) aufnimmt und ober- und unterhalb des Transportbands (5) Schleifenstücke (11, 12) einer Induktionsschleife (10) angeordnet sind, zwischen denen das offene Mantelende (15) der Tuben (2) geführt wird.

2. Vorrichtung nach Anspruch 1, **dadurch gekennzeichnet,** daß die Schleifenstücke (11, 12) seitlich des Transportbands (5) angeordnet sind.

3. Vorrichtung nach Anspruch 1 oder 2, **dadurch gekennzeichnet,** daß in Förderrichtung des Transportbands (5) gesehen vor den Schleifenstücken (11, 12) ein Anschlag (8) vorgesehen ist, gegen den die offenen Mantelenden (15) geführt werden.

4. Vorrichtung nach Anspruch 3, **dadurch gekennzeichnet,** daß an der dem Anschlag (8) gegenüberliegenden Seite des Transportbands (5) eine Luftdüse (7) angeordnet ist, deren Luftstrahl gegen das Kopfende der Tuben (2) gerichtet ist.

5. Vorrichtung nach einem der Ansprüche 1 bis 4, **dadurch gekennzeichnet,** daß das Transportband (5) mit Prismen (6) besetzt ist, zwischen denen die Tuben (2) zu liegen kommen.

6. Vorrichtung nach einem der Ansprüche 1 bis 5, **dadurch gekennzeichnet,** daß der Abstand zwischen dem den Schleifenstücken (11, 12) zugewandten Rand des Transportbands (5) und diesen Schleifenstücken (11, 12) größer ist als die Breite der Streifen (14).

## Claims

1. A mechanism for producing a strip of sealing varnish at the open
end of the jacket of a tube, where in a first station the strip is applied to the inside of the tube and the strip is then dried whilst passing through a second station, characterized in that the said mechanism exhibits an endless conveyor belt (5) which receives the tubes (2), each provided with its strip (14), and above and below the conveyor belt (5) pieces (11, 12) of an induction loop (10) are arranged, between which the open end of the jacket (15) of each tube (2) is guided.

2. A mechanism as in Claim 1, characterized in that the pieces (11, 12)
of loop are arranged at the side of the conveyor belt (5).

3. A mechanism as in Claim 1 or 2, characterized in that
in advance, looking in the direction of conveyance of the conveyor belt (5), of the pieces (11, 12) of loop a stop (8) is provided, against which the open ends (15) of the jackets are carried.

4. A mechanism as in Claim 3, characterized in that
at the side of the conveyor belt (5) opposite the stop (8) an air nozzle (7) is arranged, the jet of air from which is directed against the head end of the tubes (2).

5. A mechanism as in one of the Claims 1 to 4, characterized in that
the conveyor belt (5) is occupied by prisms (6) betwen which the tubes (2) come to lie.

6. A mechanism as in one of the Claims 1 to 5, characterized in that
the distance between the edge of the conveyor belt (5) next the pieces (11, 12) of loop and the said pieces (11, 12) of loop is greater than the width of the strips (14).

## Revendications

1. Dispositif pour produire une bande de vernis d'étanchéité sur l'extrémité ouverte de la surface latérale d'un tube, dans lequel la bande est appliquée sur le côté intérieur du tube dans un premier poste, la bande étant ensuite séchée en traversant un deuxième poste, caractérisé par le fait qu'il comporte une bande transporteuse sans fin (5) qui reçoit les tubes (2) pourvus de la bande (14), et que des éléments de boucle (11, 12) d'une boucle d'induction (10) sont disposés au-dessus et au-dessous de la bande transporteuse (5), l'extrémité ouverte (15) de la surface latérale des tubes (2) étant guidée entre ceux-ci.

2. Dispositif selon la revendication 1, caractérisé par le fait que les éléments de boucle (11, 12) sont disposés latéralement par rapport à la bande transporteuse (5).

3. Dispositif selon la revendication 1 ou 2, caractérisé par le fait qu'il est prévu, en avant des éléments de boucle (11, 12) dans la direction de déplacement de la bande transporteuse (5), une butée (8) contre laquelle sont guidées les extrémités ouvertes (15) de la surface latérale des tubes.

4. Dispositif selon la revendication 3, caractérisé par le fait qu'une buse à air (7) dont le jet d'air est dirigé vers l'extrémité de tête des tubes (2) est disposée sur le côté de la bande transporteuse (5) qui est opposé à la butée (8).

5. Dispositif selon l'une des revendications 1 à 4, caractérisé par le fait que la bande transporteuse (5) est pourvue de supports prismatiques (6) entre lesquels les tubes (2) viennent se poser.

6. Dispositif selon l'une des revendications 1 à 5, caractérisé par le fait que la distance entre le bord de la bande transporteuse (5) qui est tourné vers les éléments de boucle (11, 12) et ces éléments de boucle (11, 12) est supérieure à la largeur des bandes (14).
